# EUROPÄISCHE PATENTSCHRIFT

(11) **EP 2 582 551 B1**
(45) Veröffentlichungstag und Bekanntmachung des Hinweises auf die Patenterteilung: **31.08.2016**
(21) Anmeldenummer: 11799617.3
(22) Anmeldetag: 17.06.2011
(51) Int. Cl.: B60R 21/206, B60R 21/231

(54) **KNIEAIRBAGANORDNUNG FÜR FAHRZEUGE**
KNEE AIRBAG ARRANGEMENT FOR VEHICLES
ENSEMBLE COUSSIN DE SÉCURITÉ POUR LES GENOUX POUR VÉHICULES

(30) Priorität: 17.06.2010 DE 102010030194
(43) Veröffentlichungstag der Anmeldung: 24.04.2013
(73) Patentinhaber: Stemp, Norbert, 82223 Eichenau (DE)
(72) Erfinder: Stemp, Norbert, 82223 Eichenau (DE)
(74) Vertreter: Drexl, Janna
(86) Internationale Anmeldenummer: PCT/DE2011/050021
(87) Internationale Veröffentlichungsnummer: WO 2012/062289

(56) Entgegenhaltungen:
- EP-A1- 1 300 299
- EP-A1- 1 354 771
- EP-A1- 1 431 132
- EP-A1- 1 518 762
- EP-A1- 1 531 098
- EP-A2- 1 262 377

## Beschreibung

Die vorliegende Erfindung betrifft eine Knieairbaganordnung gemäß den Merkmalen des Patentanspruches 1.

Moderne, hochwertige Fahrzeuge werden zunehmend auch mit Knieairbags ausgestattet, die verhindern sollen, dass der Fahrer bzw. Beifahrer bei einem Crash mit seinen Knien zu weit nach vorne geschleudert wird. Konkret geht es um Knieairbaganordnungen, bei denen das Knieairbagmodul in einem unteren Bereich der Instrumententafel angeordnet ist Bei der Auslösung des Airbags entfaltet sich dieser zunächst ein Stück weit nach unten und anschließend entlang der Instrumententafelverkleidung schräg nach oben. Die EP 1 531 098 offenbart eine Knieairbaganordnung nach dem Oberbegriff des Anspruchs 1.

Aufgabe der Erfindung ist es, eine kostengünstige Knieairbaganordnung zu schaffen, die eine hohe Zuverlässigkeit aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Knieairbaganordnung für Fahrzeuge mit einem Airbagmodul, das in einem unteren Bereich einer Instrumententafel eines Fahrzeugs angeordnet ist.

Der Kern der Erfindung besteht darin, dass ein Airbag der Knieairbaganordnung in einem Bereich zwischen dem Airbagmodul und einem Knieaufprallbereich, d. h. einem Bereich des Airbags, der im aufgeblasenen Zustand des Airbags die Knie eines Fahrzeuginsassen abfangen soll, einen Bereich geringeren Querschnitts aufweist.
Der Bereich geringeren Querschnitts kann z. B. durch in diesem Bereich im Innern des Airbags angeordnete und mit dem Airbag vernähte "Gasleitwände" oder durch "Abnähungen" erreicht werden. Ziel dieser "Maßnahme" ist es, den Knieairbag so zu gestalten, dass die Gasvolumenverteilung optimal ist. Gasvolumen soll vorzugsweise möglichst nur dort vorgesehen sein, wo es tatsächlich benötigt wird, insbesondere im Knieaufprallbereich des Airbags. Das Volumen bzw. der Querschnitt der übrigen Knieairbagbereiche kann deutlich kleiner sein. Insgesamt wird somit das Volumen des Airbags auf ein notwendiges Mindestmaß minimiert, was die Verwendung eines relativ kleinen, kostengünstigen Gasgenerators ermöglicht.

Im Bereich zwischen dem Airbagmodul und dem Knieaufprallbereich kann ein abgenähter, im aufgeblasenen Zustand des Airbags nahezu oder vollkommen gasloser Bereich vorgesehen sein.

Alternativ oder ergänzend dazu kann im Inneren des Airbags eine Gasleitwand aus Gewebematerial eingenäht sein, die sich im Wesentlichen in einer Strömungsrichtung bzw. in einem Winkel von weniger als 45° in Bezug auf die Hauptströmungsrichtung des bei der Airbagauslösung in den Airbag einströmenden Gases erstreckt. Durch eine oder mehrere derartige Gasleitwände kann zum einen das Volumen des Airbags in Airbagbereichen, in denen kein Aufprall des Insassen zu erwarten ist, minimiert werden. Eine weitere, ebenfalls sehr wichtige Funktion derartiger Gasleitwände ist darin zu sehen, dass sie den Gasstrom beim Aufblasen Airbags "kanalisieren" und somit dazu beitragen, dass der Airbag schnell, d. h. bereits im teilweisen aufgeblasenen Zustand annähernd seine Endform (entsprechend dem voll ausgeblasenen Zustand) erreicht. Im Inneren des Airbags kann eine derartige Gasleitwand vorgesehen sein. Alternativ dazu können auch mehrere derartige Gasleitwände vorgesehen sein.

Die mindestens eine Gasverteilöffnung ermöglicht ein Überströmen von Airbaggas von der einen Seite der Gasleitwand auf die andere Seite der Gasleitwand und somit einen Druckausgleich zwischen den auf gegenüberliegenden Seiten der Gasleitwand befindlichen Gaskammern.

Um ein definiertes und sehr zuverlässiges Entfalten bzw. Aufblasen des Airbags zu erreichen, kann ein spezielles Faltungssystem vorgesehen sein. So kann das dem Airbagmodul zugewandte Ende des Airbags im nicht ausgelösten Zustand des Airbags zick-zack-artig gefaltet sein. Dadurch wird erreicht, dass zu Beginn des Aufblasvorgangs das "restliche", d. h. das dem Airbagmodul abgewandte Luftsackpaket komplett aus dem Airbagmodul ausgeworfen wird.

Das dem Airbagmodul abgewandte Ende des Airbags ist im nicht ausgelösten Zustand vorzugsweise aufgerollt. Seitliche Bereiche des Airbags können im nicht ausgelösten Zustand des Airbags zu einem Mittelbereich hin umgeschlagen bzw. gefaltet sein.

Beim Auslösen des Airbags wird zunächst der zick-zack-artig gefaltete, dem Gasgenerator zugewandte Abschnitt des Airbags aufgeblasen, wobei das restliche Luftsackpaket ausgeworfen wird. Anschließend öffnen sich die beiden seitlich eingeklappten Airbagbereiche. In der Endphase des Aufblasvorgangs strömt dann Gas auch in den aufgerollten Bereich des Airbags. Durch ein derartiges "Faltungssystem" wird eine sehr prozesssichere Airbagentfaltung ermöglicht.

Wie bereits erwähnt, weist die Knieairbaganordnung gemäß der Erfindung ein Airbagmodul auf, das in einem unteren Bereich der Instrumententafel eines Fahrzeugs angeordnet ist. Die Instrumententafel weist eine Instrumententafelverkleidung auf, die sich etwa von einem kniehohen Bereich der Instrumententafel nach unten in Richtung eines Fußraums erstreckt. Die Instrumententafelverkleidung überdeckt das Airbagmodul nicht, sondern endet - vom Fahrgastraumbereich aus gesehen - vor dem Airbagmodul. Die Instrumententafelverkleidung weist dort eine dem Fahrgastraum des Fahrzeugs abgewandte, vordere, untere Kante auf. Das Airbagmodul an sich ist aus Designgründen durch ein sich an die vordere Kante der Instrumententafelverkleidung anschließendes Dekorelement verdeckt. Das Dekorelement kann im Wesentlichen eben ausgeführt sein. Denkbar sind allerdings auch gewölbte Gestaltungen. Das Dekorelement weist eine der vorderen unteren Kante der Instrumententafelverkleidung zugewandte hintere untere Kante auf.

Um bei einem Crash einen Austritt des Knieairbags aus dem Airbagmodul zu ermöglichen, kann das Dekorelement als "Aufreißelement" ausgebildet sein. Das Dekorelement weist dementsprechend eine Materialschwächung auf, entlang der es bei einer Auslösung des Airbagmoduls aufreißt. Die Materialschwächung kann linienförmig ausgebildet sein und zwar entsprechend oder ähnlich einem "H". Eine H-förmige Materialschwächung definiert entsprechend ihrer Form einen vorderen und einen hinteren jeweils bei der Auslösung des Airbagmoduls nach unten ausklappenden, laschenartigen Abschnitt.

Gemäß der Erfindung ist der hintere laschenartige Abschnitt des Dekorelements so gestaltet, dass er im ausgeklappten Zustand die vordere untere Kante der Instrumententafelverkleidung überdeckt und als "Schussrampe" für den sich entfaltenden Knieairbag fungiert.

Bei der Airbagauslösung kann vorgesehen sein, dass der hintere laschenartige Abschnitt um einen Winkel nach unten ausklappt, der im Bereich zwischen 90° und 180° liegt, sodass der laschenartige Abschnitt die vordere untere Kante der Instrumententafelverkleidung überdeckt. Der hintere laschenartige Abschnitt hat somit für den sich entfaltenden Knieairbag eine spoilerartige Funktion. Er verhindert, dass der sich entfaltende Knieairbag an der vorderen unteren Kante der Instrumententafelverkleidung beschädigt wird, wenn er sich entlang der Instrumententafelverkleidung nach oben hin entfaltet.

Eine derartige "Schussrampe" ist insbesondere bei Airbaganordnungen von Vorteil, bei denen im nicht im nichtausgelösten Zustand des Airbagmoduls die hintere untere Kante des Dekorelements geringfügig höher in Bezug auf eine Fahrzeughochachse angeordnet ist, als die vordere untere Kante der Instrumententafelverkleidung.

Dies kann aus Designgründen von Vorteil sein. Ist nämlich das Dekorelement zumindest geringfügig nach oben in Bezug auf die vordere untere Kante der Instrumententafelverkleidung versetzt, so ist sichergestellt, dass die Stirnseite des Dekorelements vom Fahrgastraum aus nicht zu sehen ist, was ein sehr ansprechendes Design ermöglicht. Die sich dadurch zwischen dem Dekorelement und der vorderen unteren Kante der Instrumententafelverkleidung ergebende "Stufe" wird bei einer Auslösung des Airbags durch die "Schussrampe" überdeckt und hat somit keinen negativen Einfluss auf den Knieairbag bzw. auf die Entfaltung des Kniearbags.

Nach einer Weiterbildung der Erfindung ist die "H-förmige" Materialschwächung asymmetrisch. Beispielsweise kann vorgesehen sein, dass der hintere laschenartige Abschnitt schmäler ist als der vordere laschenartige Abschnitt.

Im Folgenden wird die Erfindung im Zusammenhang mit der Zeichnung näher erläutert. Es zeigen:
Figuren 1, 2 ein erstes Ausführungsbeispiel eines Knieairbags gemäß der Erfindung;
Figuren 3,4 ein Ausführungsbeispiel, ähnlich dem in den Figuren 1, 2 gezeigten Ausführungsbeispiel;
Figuren 5, 6 das Faltsystem eines Airbags gemäß der Erfindung.

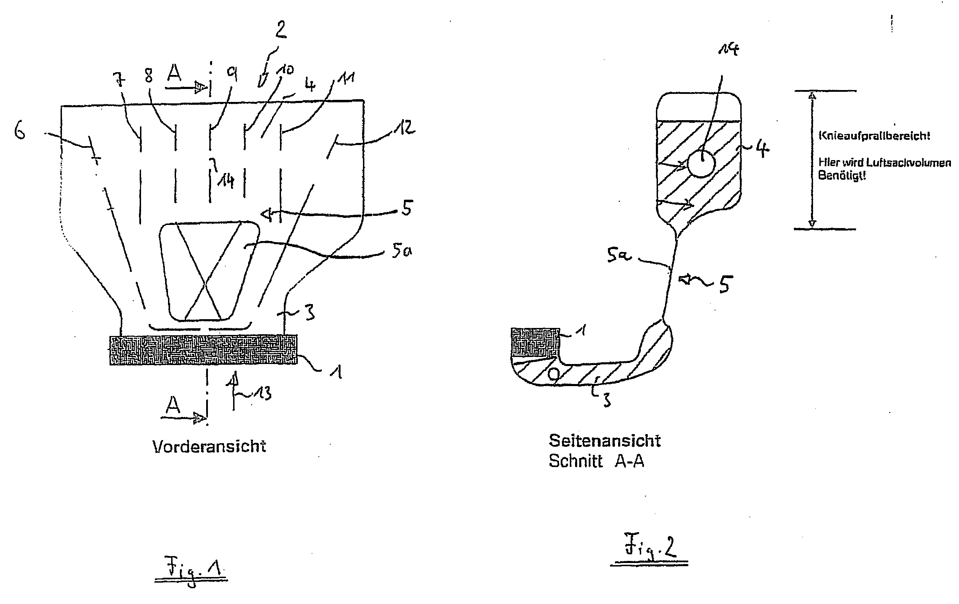

Figur 1 zeigt ein Airbagmodul 1 in einer hier nicht näher dargestellten Knieairbaganordnung. Bei einer Airbagauslösung entfaltet sich ein Airbag 2 aus dem Airbagmodul 1. Der Airbag 2 weist einen unteren Bereich 3 auf, der dem Airbagmodul 1 zugewandt ist und einen oberen, als Knieaufprallbereich fungierenden Bereich 4, der dem Airbagmodul 1 abgewandt ist, sowie einen dazwischenliegenden Bereich 5.

Wie aus Figur 1 und insbesondere aus Figur 2 ersichtlich ist, weist der Bereich 5 einen geringeren "Strömungsquerschnitt" auf als der Bereich 3 und insbesondere einen wesentlich geringeren Querschnitt als der Knieaufprallbereich 4. Eine derartige "Einschnürung" hat den Zweck, das Gesamtvolumen des Airbags auf ein minimal notwendiges Volumen zu verringern. Das Gasvolumen soll also nur bzw. insbesondere dort vorgesehen sein, wo die Gefahr eines Insassenaufpralls besteht. Bei einem Knieairbag ist dies der Knieaufprallbereich 4. Im Bereich 5 und im Bereich 3 besteht kaum die Gefahr eines Insassenaufpralls. Folglich braucht dort auch kein Gasvolumen "vorgehalten" zu werden.

Bei dem in den Figuren 1, 2 gezeigten Ausführungsbeispiel ist im Bereich 5 sogar ein vollständig abgenähter, im aufgeblasenen Zustand des Airbags 2 vollkommen gasloser Bereich 5a vorgesehen, der keinerlei Gasvolumen aufnimmt.

Zusätzlich sind im Inneren des Airbags Gasleitwände 6 - 12 vorgesehen. Die Gasleitwände 6, 12 sind in einem Winkel von etwa 20° bis 25° in Bezug auf die Hauptströmungsrichtung 13 des bei der Airbagauslösung in den Airbag 2 einströmenden Gases angeordnet Die Gasleitwände 7 - 11 sind im Wesentlichen parallel zur Richtung 13 des bei der Airbagauslösung in den Airbag 2 einströmenden Gases angeordnet.

Die Gasleitwände 6 - 12 haben im Wesentlichen zwei Funktionen. Zum einen bilden Sie "Einschnürungen", die zur Minimierung des Gesamtvolumens bzw. zur Optimierung der Volumenverteilung innerhalb des Airbags 2 beitragen. Zum anderen kanalisieren sie während des Aufblasvorgangs das einströmende Gas und bewirken, dass der Airbag 2 sehr schnell, d. h. deutlich vor Erreichen des voll aufgeblasenen Zustands, im Wesentlichen seine Endform erreicht.

Wie aus den Figuren 1, 2 ersichtlich ist, weist beispielsweise die Gasleitwand 9 im Bereich des Knieaufprallbereichs eine Durchgangsöffnung 14 auf, die als "Gasverteilöffnung" fungiert, und die ein Überströmen von Gas von der einen Seite der Gasleitwand 9 auf die andere Seite der Gasleitwand 9 und somit einen Druckausgleich ermöglicht. Wie aus Figur 1 ersichtlich ist, sind auch in den übrigen Gasleitwänden derartige Durchgangs- bzw. Gasverteilöffnungen vorgesehen.

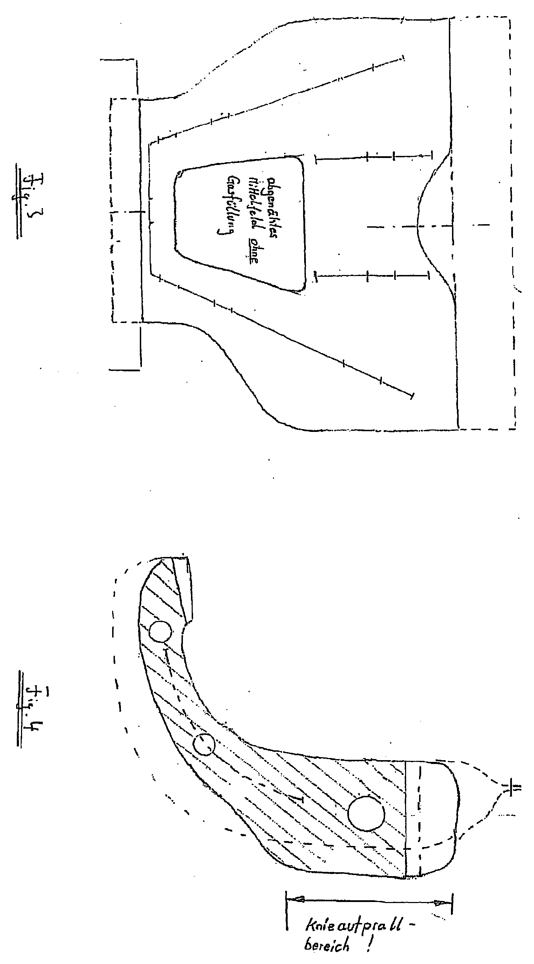

Die Figuren 3, 4 zeigen ein ähnliches Ausführungsbeispiel wie die Figuren 1, 2.

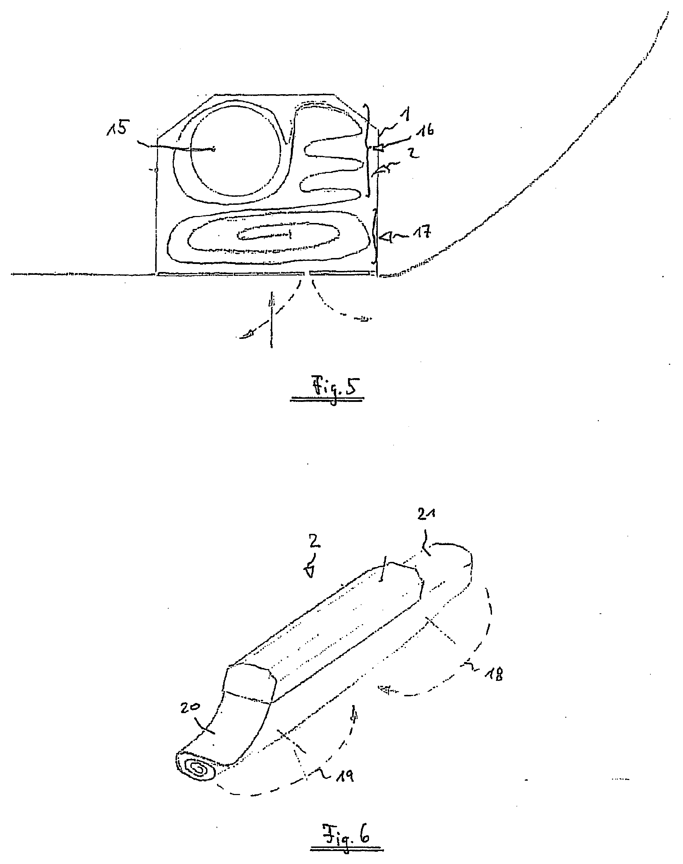

Die Figuren 5, 6 beschreiben ein mögliches Faltsystem für einen Knieairbag gemäß der Erfindung.

Im nicht ausgelösten Zustand ist der Airbag 2 zusammengefaltet und befindet sich innerhalb des Airbagmoduls 1. Ebenfalls innerhalb des Airbagmoduls 1 ist ein Gasgenerator 15 vorgesehen. Ein dem Airbagmodul 1 bzw. dem Gasgenerator 15 zugewandtes Ende 16 des Airbags 2 ist zick-zack-artig gefaltet. Ein dem Airbagmodul 1 bzw. dem Gasgenerator 15 abgewandtes Ende 17 des Airbags ist aufgerollt.

Wie aus Figur 5 ersichtlich ist, ist das Airbagmodul 1 hinter einer H-förmigen Aufreißklappe im Bereich einer Unterseite einer hier nicht näher dargestellten Instrumententafel angeordnet.

Was aus Figur 5 nicht ersichtlich ist, sind seitliche Bereiche des Airbags (vgl. Figuren 1, 3), die zu einem Mittelbereich des Airbags 2 hin umgeschlagen bzw. gefaltet werden, was in Figur 6 durch die Pfeile 18, 19 angedeutet ist. Figur 6 zeigt einen Zustand, in dem die seitlichen Bereiche des Airbags noch nicht umgeschlagen sind. Vor dem Einbringen des Airbags 2 in das Airbagmodulgehäuse 1 werden die seitlichen Bereiche 20, 21 entsprechend den Pfeilen 18, 19 nach innen umgefaltet.

## Patentansprüche

1. Knieairbaganordnung für Fahrzeuge, die Knieairbaganordnung umfasst
- eine Instrumententafel,
- einen Fahrgastraum,
- ein Airbagmodul (1), das in einem unteren Bereich der Instrumententafel eines Fahrzeugs angeordnet ist,
- einen Airbag (2), der Airbag (2) umfasst einen Knieaufprallbereich (4), der im aufgeblasenen Zustand des Airbags (2) die Knie eines Fahrzeuginsassen abfangen soll, der Airbag (2) weist zwischen dem Airbagmodul (1) und dem Knieaufprallbereich (4) einen Bereich geringeren Querschnitts auf und der Airbag (2) weist mindestens eine im Inneren des Airbags eingenähte Gasleitwand (6 - 12) auf, wobei sich die Gasleitwand (6 - 12) im Wesentlichen in einer Strömungsrichtung des bei der Airbagauslösung in den Airbag (2) einströmenden Gases erstreckt,
**dadurch gekennzeichnet, dass** in der mindestens einen Gasleitwand mindestens eine Gasverteilöffnung (14) vorgesehen ist, die einen Druckausgleich zwischen den auf gegenüberliegenden Seiten der Gasleitwand (6 - 12) befindlichen Gaskammern ermöglicht.

2. Knieairbaganordnung nach Anspruch 1, **dadurch gekennzeichnet, dass** der Airbag (2) zwischen dem Airbagmodul (1) und dem Knieaufprallbereich (4), einen nahezu oder vollkommen gaslosen Bereich (5a) aufweist.

3. Knieairbaganordnung nach Anspruch 1 oder 2, **dadurch gekennzeichnet, dass** ein dem Airbagmodul (1) zugewandtes Ende (16) des Airbags (2) im nicht ausgelösten Zustand des Airbags (2) zick-zack-artig gefaltet ist.

4. Knieairbaganordnung nach einem der Ansprüche 1 bis 3, **dadurch gekennzeichnet, dass** ein dem Airbagmodul (1) abgewandtes Ende (17) des Airbags (2) im nicht ausgelösten Zustand aufgerollt ist.

5. Knieairbaganordnung nach einem der Ansprüche 1 bis 4, **dadurch gekennzeichnet, dass** der Airbag (2) Seitenbereiche (20, 21) aufweist, die im nicht ausgelösten Zustand des Airbags (2) zu einem Mittelbereich hin umgeschlagen sind.

6. Knieairbaganordnung nach einem der Ansprüche 1 bis 5, **dadurch gekennzeichnet, dass** eine Instrumententafelverkleidung vorgesehen ist, die sich von einem etwa kniehohen Bereich der Instrumententafel nach unten in Richtung eines Fußraums erstreckt und eine einem Fahrgastraum des Fahrzeugs abgewandte, vordere untere Kante aufweist, und ein sich an die vordere untere Kante der Instrumententafelverkleidung anschließenden Dekorelement vorgesehen ist, welches
- eine der vorderen unteren Kante der Instrumententafelverkleidung zugewandte hintere untere Kante aufweist,
- im nichtausgelösten Zustand des Airbagmoduls (1) das Airbagmodul (1) von unten her verdeckt und
- eine H-förmige Materialschwächung (10) aufweist, entlang der es bei einer Auslösung des Airbagmoduls (1) aufreißt, wobei die Materialschwächung einen vorderen und einen hinteren bei der Auslösung des Airbagmoduls ausklappenden laschenartigen Abschnitt aufweist, wobei der hintere laschenartige Abschnitt so gestaltet ist, dass er im ausgeklappten Zustand die vordere untere Kante der Instrumententafelverkleidung überdeckt und als Schussrampe für den sich entfaltenden Knieairbag fungiert.

7. Knieairbaganordnung nach Anspruch 6, **dadurch gekennzeichnet, dass** im nichtausgelösten Zustand des Airbagmoduls (1) die hintere untere Kante des Dekorelements geringfügig höher angeordnet ist als die vordere untere Kante der Instrumententafelverkleidung (4).

8. Knieairbaganordnung nach Anspruch 6 oder 7, **dadurch gekennzeichnet, dass** der hintere laschenartige Abschnitt schmäler ist als der vorder laschenartige Abschnitt.

## Claims

1. A knee airbag arrangement for vehicles, the knee airbag arrangement comprising
- an instrument panel,
- a passenger compartment,
- an airbag module (1), which is arranged in a lower portion of the instrument panel of the vehicle,
- an airbag (2), said airbag (2) comprises a knee impact area (4), which is designed to intercept the knees of a vehicle occupant in the inflated state of the airbag (2), said airbag (2) exhibits an area of smaller cross section between the airbag module (1) and the knee impact area (4), and said airbag (2) exhibits at least one gas guiding wall (6 - 12) being sewed inside the airbag, wherein the gas guiding wall (6 - 12) extends substantially in a flow direction of the gas flowing into the airbag when the airbag (2) is triggered,
**characterized in that** at least one opening (14) for distributing gas is provided in the at least one gas guiding wall, said opening allows a pressure equalization between the gas chambers located at opposite sides of the gas guiding wall (6 - 12).

2. The knee airbag arrangement according to claim 1, **characterized in that** the airbag (2) exhibits a nearly or completely gasless area (5a) between the airbag module (1) and the knee impact area (4).

3. Knee airbag arrangement according to claim 1 or 2, **characterized in that** an end (16) of the airbag (2), which end faces the airbag module (1) of the airbag (2) is folded in a zigzag pattern when the airbag (2) is in a non-triggered state.

4. Knee airbag arrangement according to any one of claims 1 to 3, **characterized in that** an end (17) of the airbag (2), which end facing away from the airbag module (1), is rolled up in the non-triggered state.

5. Knee airbag arrangement according to any one of claims 1 to 4, **characterized in that** the airbag (2) exhibits lateral areas (20, 21), which are turned towards a central area in the non-triggered state of the airbag (2).

6. Knee airbag arrangement according to any one of claims 1 to 5, **characterized in that** an instrument panel cover is provided, which extends downwards from an area being in about knee height of the instrument panel in the direction of the footwell and exhibits a front lower edge facing away from the passenger compartment of the vehicle, and a decorative element is provided, which is adjoined at the front lower edge of the instrument panel cover, which decorative element
- exhibits a rear lower edge facing the front lower edge of the instrument panel cover,
- covers the airbag module (1) from below in the non-triggered state of the airbag module (1), and
- exhibits an H-shaped material weakness (10) along which it ruptures when the airbag module (1) is triggered, wherein the material weakness exhibits a front and a rear flap-like portion, which is folded downwards when the airbag module is triggered, wherein the rear flap-like portion is designed so that it covers the front lower edge of the instrument panel cover in the unfolded state and acts as a shooting ramp for the unfolding knee airbag.

7. Knee airbag arrangement according to claim 6, **characterized in that** the rear lower edge of the decorative element is slightly displaced upwards than the front lower edge of the instrument panel cover (4) in the non-triggered state of the airbag module (1).

8. Knee airbag arrangement according to claim 6 or 7, **characterized in that** the rear flap-like portion is narrower than the front flap-like portion.

## Revendications

1. Ensemble coussin de sécurité pour les genoux pour véhicules, l'ensemble coussin de sécurité pour les genoux comprenant
- un tableau de bord,
- un habitacle,
- un module (1) de coussin de sécurité, qui est disposé dans une zone inférieure du tableau de bord d'un véhicule,
- un coussin de sécurité (2), lequel coussin de sécurité (2) comprend une zone d'impact de genou (4) qui, une fois le coussin de sécurité (2) gonflé, vise à réceptionner les genoux d'un passager du véhicule, le coussin de sécurité (2) comprend entre le module (1) de coussin de sécurité et la zone d'impact de genou (4) une zone de plus petite section transversale et le coussin de sécurité (2) comprend au moins une paroi de guidage de gaz (6 - 12) cousue à l'intérieur du coussin de sécurité, la paroi de guidage de gaz (6 - 12) s'étendant sensiblement dans une direction d'écoulement du gaz affluant dans le coussin de sécurité (2) lorsque le coussin de sécurité se déclenche,
**caractérisé en ce qu'**au moins une ouverture de distribution de gaz (14), qui permet une compensation de pression entre les chambres de gaz situées sur les côtés opposés de la paroi de guidage de gaz (6 - 12), est ménagée dans ladite au moins une paroi de guidage de gaz.

2. Ensemble coussin de sécurité pour les genoux selon la revendication 1, **caractérisé en ce que** le coussin de sécurité (2) comprend une zone (5a) presque ou entièrement exempte de gaz entre le module (1) de coussin de sécurité et la zone d'impact de genou (4).

3. Ensemble coussin de sécurité pour les genoux selon la revendication 1 ou 2, **caractérisé en ce qu'**une extrémité (16) du coussin de sécurité (2) tournée vers le module (1) de coussin de sécurité est pliée en zigzag lorsque le coussin de sécurité (2) ne s'est pas déclenché.

4. Ensemble coussin de sécurité pour les genoux selon l'une quelconque des revendications 1 à 3, **caractérisé en ce qu'**une extrémité (17) du coussin de sécurité (2) opposée au module (1) de coussin de sécurité est enroulée lorsque le coussin de sécurité ne s'est pas déclenché.

5. Ensemble coussin de sécurité pour les genoux selon l'une quelconque des revendications 1 à 4, **caractérisé en ce que** le coussin de sécurité (2) comprend des zones latérales (20, 21), qui sont rabattues en direction d'une zone centrale lorsque le coussin de sécurité (2) ne s'est pas déclenché.

6. Ensemble coussin de sécurité pour les genoux selon l'une quelconque des revendications 1 à 5, **caractérisé en ce qu'**un revêtement de tableau de bord est prévu, qui s'étend d'une zone, à peu près à hauteur des genoux, du tableau de bord vers le bas en direction d'un espace pour les pieds et comprend un bord inférieur avant opposé à un habitacle du véhicule, et un élément de décoration se raccordant au bord inférieur avant du revêtement du tableau de bord est prévu, lequel
- comprend un bord inférieur arrière tourné vers le bord inférieur avant du revêtement du tableau de bord,
- recouvre le module (1) de coussin de sécurité par le bas lorsque le module (1) de coussin de sécurité ne s'est pas déclenché et
- présente un affaiblissement de matériau en forme de H (10), le long duquel il se déchire lorsque le module (1) de coussin de sécurité se déclenche, l'affaiblissement de matériau comprenant une partie avant et une partie arrière du type languette se déployant lorsque le module de coussin de sécurité se déclenche, la partie arrière du type languette étant configurée de sorte qu'une fois déployée, elle recouvre le bord inférieur avant du revêtement du tableau de bord et fonctionne comme une rampe de tir pour le coussin de sécurité pour les genoux se déployant.

7. Ensemble coussin de sécurité pour les genoux selon la revendication 6, **caractérisé en ce que**, lorsque le module (1) de coussin de sécurité ne s'est pas déclenché, le bord inférieur arrière de l'élément de décoration est agencé légèrement plus haut que le bord inférieur avant du revêtement (4) du tableau de bord.

8. Ensemble coussin de sécurité pour les genoux selon la revendication 6 ou 7, **caractérisé en ce que** la partie arrière du type languette est plus étroite que la partie avant du type languette.
